(19) Europäisches Patentamt
European Patent Office
Office européen des brevets

(11) **EP 2 950 501 B1**

(12) **EUROPEAN PATENT SPECIFICATION**

(45) Date of publication and mention
of the grant of the patent:
**25.03.2020 Bulletin 2020/13**

(51) Int Cl.:
*H04W 12/02* (2009.01)    *H04W 12/12* (2009.01)
*H04L 29/06* (2006.01)

(21) Application number: **14185287.1**

(22) Date of filing: **18.09.2014**

(54) **METHOD FOR TRANSMITTING AND RECEIVING FAKE COMMUNICATION DATA AND BASE STATION PERFORMING THE SAME**

VERFAHREN ZUM SENDEN UND EMPFANGEN FALSCHER KOMMUNIKATIONSDATEN UND BASISSTATION ZUR DURCHFÜHRUNG DAVON

PROCÉDÉ POUR TRANSMETTRE ET RECEVOIR DES DONNÉES DE COMMUNICATION FACTICE ET STATION DE BASE METTANT EN OEUVRE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2014 KR 20140065715**

(43) Date of publication of application:
**02.12.2015 Bulletin 2015/49**

(73) Proprietor: **Electronics and Telecommunications Research Institute
Daejeon-city 305-350 (KR)**

(72) Inventors:
 • **Jeon, Sungho**
  **612-781 Busan (KR)**
 • **Yun, Jeong-Han**
  **302-739 Daejeon (KR)**
 • **Kim, Woonyon**
  **305-761 Daejeon (KR)**
 • **Seo, Jungtaek**
  **305-759 Daejeon (KR)**
 • **Park, Eung Ki**
  **305-313 Daejeon (KR)**

(74) Representative: **Betten & Resch
Patent- und Rechtsanwälte PartGmbB
Maximiliansplatz 14
80333 München (DE)**

(56) References cited:

EP-A1- 2 058 982    EP-A1- 2 677 792

• DONGXI LIU ET AL: "Normalizing traffic pattern with anonymity for mission critical applications", SIMULATION SYMPOSIUM, 2004. PROCEEDINGS. 37TH ANNUAL ARLINGTON, VA, USA 18-22 APRIL 2004, PISCATAWAY, NJ, USA,IEEE, 18 April 2004 (2004-04-18), pages 293-299, XP010706396, DOI: 10.1109/SIMSYM.2004.1299494 ISBN: 978-0-7695-2110-7
• YOUSEF EBRAHIMI ET AL: "Using deceptive packets to increase base-station anonymity in wireless sensor network", WIRELESS COMMUNICATIONS AND MOBILE COMPUTING CONFERENCE (IWCMC), 2011 7TH INTERNATIONAL, IEEE, 4 July 2011 (2011-07-04), pages 842-847, XP031925738, DOI: 10.1109/IWCMC.2011.5982656 ISBN: 978-1-4244-9539-9
• XINWEN FU ET AL: "On effectiveness of link padding for statistical traffic analysis attacks", PROCEEDINGS OF THE 23RD. INTERNATIONAL CONFERENCE ON DISTRIBUTED COMPUTING SYSTEMS. ICDCS 2003. PROVIDENCE, RI, MAY 19 - 22, 2003; [INTERNATIONAL CONFERENCE ON DISTRIBUTED COMPUTING SYSTEMS], LOS ALAMITOS, CA : IEEE COMP. SOC, US, vol. CONF. 23, 19 May 2003 (2003-05-19), pages 340-347, XP010642303, DOI: 10.1109/ICDCS.2003.1203483 ISBN: 978-0-7695-1920-3

**Description**

BACKGROUND OF THE INVENTION

1. Technical Field

The present invention relates to a method for transmitting and receiving fake communication data and a base station performing the same, and more particularly, to a technology of preventing leakage of personal information from traffics of terminals by transmitting and receiving fake communication data artificially generated so that an attacker may not identify normal communication between the terminals.

2. Description of the Related Art

In accordance with popularization of smart phones, development of performance of the smart phones, and multi-functionalization of the smart phones, people have used the smart phones for several purposes for life and convenience such as Internet banking as well as business while always carrying the smart phones. This change significantly contributes to improving work efficiency, but causes a serious problem such as leakage of personal information.

For example, Korean Patent Application Publication No. 10-2013-0095571 entitled "Method for Blocking Leakage of Personal Information in Smart Phone" has disclosed a technology in which a smart phone downloading an application supporting blocking of leakage of personal information through a communication network and installing the application monitors exposure of the personal information in real time, displays a warning message inquiring whether or not the leakage of the personal information is allowed on a screen when the exposure of the personal information is attempted from another communication terminal or Internet site, provides the personal information to the corresponding communication terminal or Internet site or blocks the provision of the personal information based on whether or not a uses confirming the warning message allows the leakage of the personal information.

There is a study on a technology of encrypting communication contents in order to prevent eavesdropping in the smart phone. However, a communication target itself as well as the communication contents may leak important information. For example, when a decision maker of an important deal makes more calls to interested parties of a company A among interested parties of companies A and B with which he/she wants to make a deal, it may be inferred that it is likely that the company A will accomplish the deal in working hours. In addition, a human network and a human relation of a smart phone user may also be inferred through a recent call frequency, a call time, and the like, of the smart phone. Even though position information of the user is encrypted, when sites recently accessed by the user are limited to a specific region, it may be inferred that the user is currently present at that position or is scheduled to visit that position.

There is a study on a technology of blocking or informing the user that an external user requests information without permission in order to prevent the leakage of the personal information in the smart phone. However, there is the possibility that the external user will bypass a blocking application in order to avoid the blocking. For example, the external user may use other permitted communication ports or disguise his/her communication as normal communication. Therefore, a method for basically preventing useful information from being extracted is required.

Document EP 2 058 982 A1 discloses a radio base station 2 comprising a unit which determines whether to transmit a pseudo data frame assumed to be actual data communication according to a condition of data communication with the radio terminal 3, and a unit which stores information which is information for generating a pseudo data frame and based on actual data communication with the radio terminal 3, thereby generating and transmitting a pseudo data frame based on the stored information when starting pseudo data frame transmission.

SUMMARY OF THE INVENTION

The present invention is defined in the independent claims. The dependent claims define advantageous embodiments thereof.

BRIEF DESCRIPTION OF THE DRAWINGS

The above and other objects, features and advantages of the present invention will be more clearly understood from the following detailed description taken in conjunction with the accompanying drawings, in which:

FIG. 1 is a diagram showing a communication environment in which a base station transmitting and receiving fake communication data according to an exemplary embodiment of the present invention is positioned;
FIG. 2 is a configuration diagram schematically showing a transmitting base station transmitting fake communication data according to an exemplary embodiment of the present invention;

FIG. 3 is a configuration diagram schematically showing a receiving base station receiving fake communication data according to an exemplary embodiment of the present invention;

FIG. 4 is a flow chart showing a method for transmitting fake communication data according to an exemplary embodiment of the present invention; and

FIG. 5 is a flow chart showing a method for receiving fake communication data according to an exemplary embodiment of the present invention.

DESCRIPTION OF THE PREFERRED EMBODIMENTS

Exemplary embodiments of the present invention will be described in detail with reference to the accompanying drawings. In the present specification, a repetitive description, and a detailed description of well-known functions or constructions that may unnecessarily obscure the gist of the present invention will be omitted. Exemplary embodiments of the present invention are provided in order to fully convey the concept of the present invention to those skilled in the art. In the accompanying drawings of the present invention, shapes, dimensions, and the like, of components may be exaggerated for clarity.

Hereinafter, a method for transmitting and receiving fake communication data and a base station performing the same according to an exemplary embodiment of the present invention will be described in detail with reference to the accompanying drawings.

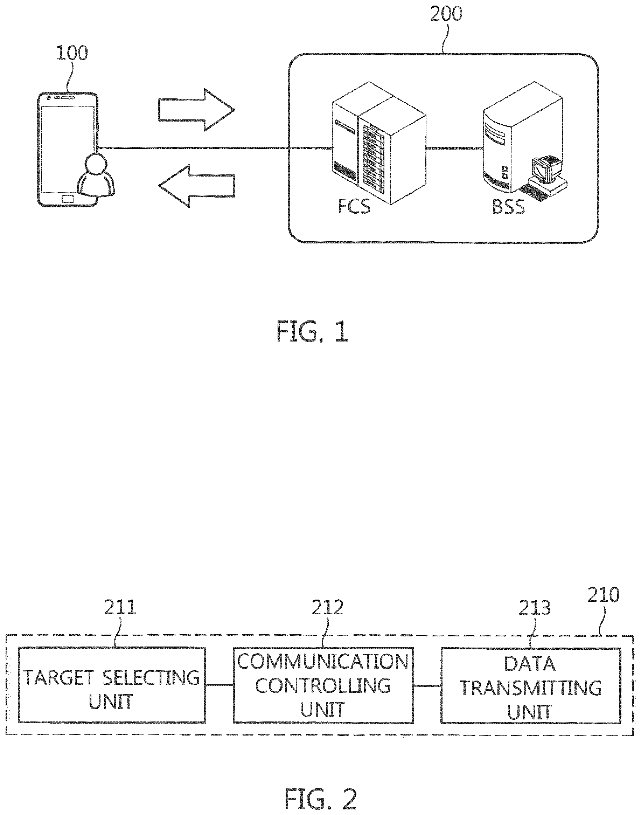

FIG. 1 is a diagram showing a communication environment in which a base station transmitting and receiving fake communication data according to an exemplary embodiment of the present invention is positioned.

Referring to FIG. 1, a base station 200 transmitting and receiving fake communication data may be positioned between terminals to transmit and receive the fake communication data. Here, traffics between the terminals mean all communications such as a phone, a text message, the Internet, and the like.

A terminal 100 may include a fake communication application (FCA) and may receive the fake communication data transferred from the base station 200 through the FCA or transfer the fake communication data to another terminal through the base station 200 through the FCA.

In a method for transmitting and receiving fake communication data according to an exemplary embodiment of the present invention, it is assumed that contents transmitted from the terminal 100 are encrypted.

Therefore, an attacker may recognize traffic information transmitted or received by the terminal 100, but does not recognize contents.

The base station 200 may include a fake communication server (FCS) and a base station server (BSS), but is not limited thereto.

The fake communication server (FCS) of the base station 200 generates the fake communication data and transmits the generated fake communication data to a specific terminal or receives the fake communication data from the specific terminal.

That is, the base station 200 according to an exemplary embodiment of the present invention transmits and receives the fake communication data between the terminals to allow the attacker not to identify normal communication, thereby making it possible to prevent leakage of personal information such as call targets, communication patterns of each target, a data communication tendency, and the like, from the traffics between the terminals.

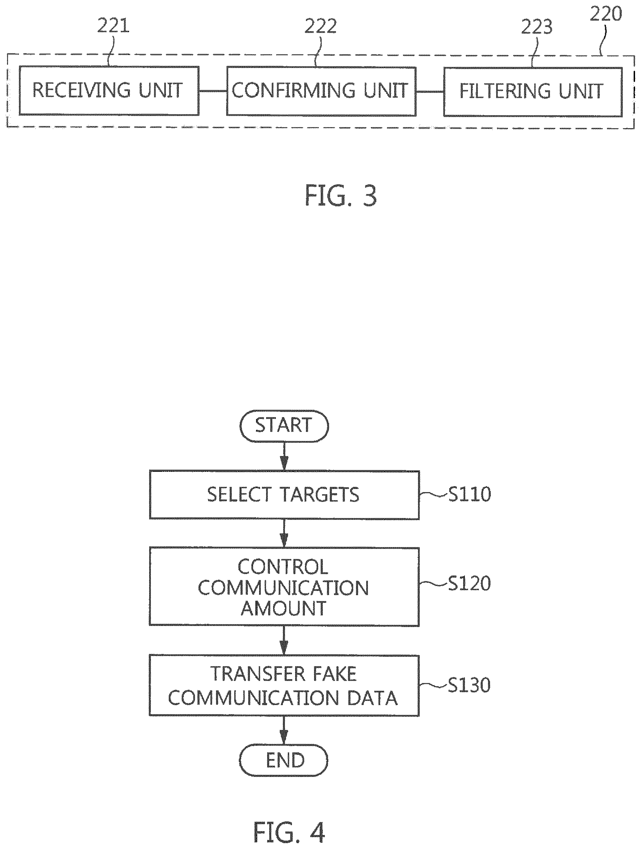

Next, configurations of a transmitting base station 210 and a receiving base station 220 transmitting and receiving the fake communication data will be described with reference to FIGS. 2 and 3.

FIG. 2 is a configuration diagram schematically showing a transmitting base station transmitting fake communication data according to an exemplary embodiment of the present invention.

Referring to FIG. 2, the transmitting base station 210 may include a target selecting unit 211, a communication controlling unit 212, and a data transmitting unit 213.

The target selecting unit 211 selects targets to and from which the fake communication data are to be transmitted and received among terminals positioned in a preset region. Here, the targets, that is, terminals, selected by the target selecting units 211 may be selected only in the case in which users of the terminals want to receive a fake communication service, but is not limited thereto.

The communication controlling unit 212 divides the targets selected by the target selecting unit 211 into groups and controls a time in which communication is performed for each of the groups. Here, the communication controlling unit 212 divides communication targets into the groups and controls the time in which communication is performed for each of the groups in order to effectively hide corresponding personal information and a human network of the terminal.

For example, since it is not good in terms of concealment of communication that anyone frequently communicates with a person registered as a boss in an address book in the terminal before bed or frequently communicates with a person registered as a family in the address book in working hours, it may cause a doubt of the attacker.

Therefore, phone numbers of the terminals installing the FCA are divided into groups such as a group with which communication is to be mainly performed in the daytime, a group with which communication is to be mainly performed at night, and the like, and the fake communication data are transmitted at different times for each of the groups.

The possibility that the fake communication data according to an exemplary embodiment of the present invention will be generated is the same as a normal distribution having the center of each time as an average value.

For example, in the case in which a daytime is set to twelve o'clock to eighteen o'clock, a "fake communication generation possibility" that the fake communication data will be generated is the same as a normal distribution having fifteen o'clock as an average. Although a transmission time depending on the group may be basically classified into morning, noon, and evening, it may be arbitrarily defined by the user. In addition, a time in which the fake communication data are to be maximally transmitted may be set (an average value of a normal distribution of the fake communication generation possibility). Furthermore, a list of phone numbers for which the fake communication data are to be generated, a weight depending on the phone numbers, and the like, may be set by the user. The fake communication generation possibility may be represented by the following Equation 1 without setting these functions in detail.

[Equation 1]

$$p_{fake} = \frac{a}{\sigma\sqrt{2\Pi}} e^{\frac{(x-\mu)^2}{2\sigma^2}} + b$$

Referring to Equation 1, in generation decision of the fake communication data, a generation decision time is a parameter to generate random numbers per generation decision time, and fake communication is generated when the generated random value is higher than a fake communication generation possibility of a current time. A normal distribution variation, a maximum value adjustment (a), an intercept (b), and the like, of the generation decision as well as the generation decision time are input as parameters, thereby making it possible to adjust a fake communication amount. When the generation of the fake communication is decided, the fake communication data may be transmitted to several persons.

The data transmitting unit 213 transfers the fake communication data to the corresponding terminal depending on a control result of the communication controlling unit 212.

FIG. 3 is a configuration diagram schematically showing a receiving base station receiving fake communication data according to an exemplary embodiment of the present invention.

Referring to FIG. 3, the receiving base station 220 may include a receiving unit 221, a confirming unit 222, and a filtering unit 223.

The receiving unit 221 receives the fake communication data from the terminal 100 positioned in a set region.

The confirming unit 222 confirms whether an identification value meaning fake communication is present in the fake communication data received by the receiving unit 221.

The filtering unit 223 filters a corresponding traffic in the case in which the identification value is present in the fake communication data received by the receiving unit 221 as a confirming result of the confirming unit 222.

As described above, since the receiving base station 220 receives the fake communication data from users that want to receive the fake communication service, that is, terminals including the FCA, fake communication is performed only in the terminals that want to receive the fake communication service.

Next, a method for transmitting fake communication data in a transmitting base station will be described in detail with reference to FIG. 4.

FIG. 4 is a flow chart showing a method for transmitting fake communication data according to an exemplary embodiment of the present invention.

Referring to FIG. 4, the transmitting base state 210 selects targets to and from which the fake communication data are to be transmitted and received among terminals positioned in a set region (S110). Here, the set region corresponds to a region preset by a base station.

The targets, that is, terminals, selected in S110 may be selected only in the case in which users of the terminals want to receive a fake communication service, but is not limited thereto.

The transmitting base station 210 divides the targets selected in S110 into groups and controls a time in which communication is performed for each of the groups, that is, a communication amount (S120).

The transmitting terminal 210 transmits the fake communication data to the corresponding terminal depending on a control result in S120 (S130).

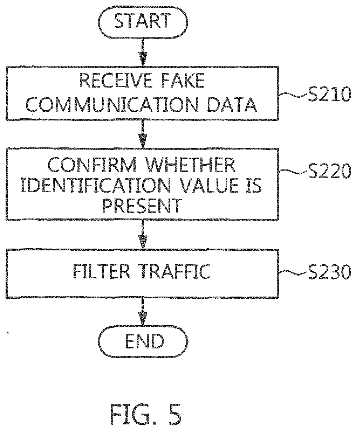

Next, a method for receiving fake communication data in a receiving base station will be described in detail with reference to FIG. 5.

FIG. 5 is a flow chart showing a method for receiving fake communication data according to an exemplary embodiment of the present invention.

Referring to FIG. 5, the receiving base station 220 receives fake communication terminal from the terminal 100 positioned in a set region (S210) Here, the set region corresponds to a region preset by a base station.

The receiving base station 220 confirms whether an identification value meaning fake communication is present in the fake communication data received in S210 (S220).

The receiving base station 220 filters a corresponding traffic (S230) in the case in which the identification value is present in the received fake communication data as a confirming result in S220.

As described above, the base station according to an exemplary embodiment of the present invention transmits the fake communication data based on a step of selecting the targets to and from which the fake communication data are to be transmitted and received among the terminals positioned in the set region, a step of controlling the communication amount depending on the selected targets, and a step of transferring the fake communication data to the corresponding terminal depending on the control result or receives the fake communication data through a step of receiving the data from the terminal including the fake communication application, a step of confirming whether the identification value meaning the fake communication is present in the data, and a step of filtering the traffic with the terminal in the case in which the identification value is present in the data.

Therefore, the base station transmits and receives the fake communication data between the terminals to generate the fake communication, such that the attacker may not identify normal communication, thereby making it possible to prevent leakage of personal information such as call targets, communication patterns of each target, a data communication tendency, and the like, from the traffics of the smart phones.

In accordance with the present invention, the fake communication data artificially generated so that the attacker may not identify the normal communication between the terminals are transmitted and received, thereby making it possible to prevent personal information, important business information, and the like, of the terminal user from being extracted from communication traffic patterns of the terminal by the attacker even though traffics of the terminals are monitored by the attacker (for example, a malicious application).

Hereinabove, optimal exemplary embodiments of the present invention have been disclosed in the accompanying drawings and specification. Although specific terms have been used in the present specification, they are only used for the purpose of describing the present invention and are not used for limiting the meaning or the scope of the present invention, which is disclosed in the appended claims. Therefore, it will be appreciated by those skilled in the art that various modifications and other equivalent exemplary embodiments are possible. Accordingly, the actual technical protection scope of the present invention is to be determined by the claims.

**Claims**

1.  A method for transmitting fake communication data, comprising:

    selecting targets (S110) to and from which the fake communication data are to be transmitted and received among terminals (100) positioned in a region set by a base station (200);
    controlling a communication amount (S120) depending on the selected targets, wherein the controlling includes:

    dividing the selected targets into groups according to communication times, at which communication is expected, wherein each one of the groups is associated with a particular communication time; and
    controlling a transfer of the fake communication data for each one of the groups, wherein, for each one of the groups, the transfer of the fake communication data is executed at a communication time, with which the corresponding group is associated; and

    transferring the fake communication data (S130) to a corresponding terminal depending on a control result.

2.  The method for transmitting fake communication data of claim 1, wherein the controlling includes controlling a time in which communication is performed for each of the groups.

3.  The method for transmitting fake communication data of claim 2, wherein in the controlling of the time, an average value of a normal distribution having a center of each time as an average value is controlled.

4.  The method for transmitting fake communication data of claim 1, wherein the controlling includes setting a weight depending on a phone number with which communication is performed for each of the groups to control the communication amount.

**5.** A base station (200) for transmitting fake communication data, comprising:

a target selecting unit (211) selecting targets (100) to and from which fake communication data are to be transmitted and received among terminals positioned in a set region;
a communicating controlling unit (212) controlling a communication amount depending on the selected targets, wherein the controlling includes:

dividing the selected targets into groups according to communication times, at which communication is expected, wherein each one of the groups is associated with a particular communication time; and controlling a transfer of the fake communication data for each one of the groups, wherein, for each one of the groups, the transfer of the fake communication data is executed at a communication time, with which the corresponding group is associated; and

a data transmitting unit (213) transferring the fake communication data to a corresponding terminal depending on a control result.

**6.** The base station (200) for transmitting fake communication data of claim 5, wherein the communication controlling unit (212) controls a time in which communication is performed for each of the groups.

**7.** The base station (200) for transmitting fake communication data of claim 6, wherein the communication controlling unit (212) controls an average value of a normal distribution having a center of each time as an average value.

**8.** The base station (200) for transmitting fake communication data of claim 5, wherein the communication controlling unit (212) sets a weight depending on a phone number with which communication is performed for each of the groups to control the communication amount.

**Patentansprüche**

**1.** Verfahren zum Übertragen von falschen Kommunikationsdaten, umfassend:

Selektieren von Zielen (S110), zu denen und von denen die falschen Kommunikationsdaten übertragen und empfangen werden sollen, aus Endgeräten (100), die in einer Region positioniert sind, die durch eine Basisstation (200) eingestellt ist;
Steuern einer Kommunikationsmenge (S120) in Abhängigkeit von den selektierten Zielen, wobei die Steuerung Folgendes umfasst:

Teilen der selektierten Ziele in Gruppen gemäß Kommunikationszeiten, zu denen eine Kommunikation erwartet wird, wobei jede von den Gruppen einer speziellen Kommunikationszeit zugeordnet ist; und Steuern eines Transfers der falschen Kommunikationsdaten für jede von den Gruppen, wobei für jede von den Gruppen der Transfer der falschen Kommunikationsdaten zu einer Kommunikationszeit ausgeführt wird, der die entsprechende Gruppe zugeordnet ist; und

Transferieren der falschen Kommunikationsdaten (S130) zu einem entsprechenden Endgerät in Abhängigkeit von einem Steuerergebnis.

**2.** Verfahren zum Übertragen von falschen Kommunikationsdaten nach Anspruch 1, wobei die Steuerung ein Steuern einer Zeit, in der die Kommunikation durchgeführt wird, für jede von den Gruppen umfasst.

**3.** Verfahren zum Übertragen von falschen Kommunikationsdaten nach Anspruch 2, wobei bei der Steuerung der Zeit ein Mittelwert einer Normalverteilung mit einer Mitte jeder Zeit als ein Mittelwert gesteuert wird.

**4.** Verfahren zum Übertragen von falschen Kommunikationsdaten nach Anspruch 1, wobei die Steuerung ein Einstellen eines Gewichts abhängig von einer Telefonnummer umfasst, mit der eine Kommunikation durchgeführt wird, für jede von den Gruppen zur Steuerung der Kommunikationsmenge.

**5.** Basisstation (200) zum Übertragen von falschen Kommunikationsdaten, umfassend:

eine Zielselektionseinheit (211), die Ziele (100) selektiert, zu denen und von denen falsche Kommunkationsdaten übertragen und empfangen werden sollen, aus Endgeräten, die in einer eingestellten Region positioniert sind; eine Kommunikationssteuereinheit (212), die eine Kommunikationsmenge abhängig von den selektierten Zielen steuert, wobei die Steuerung Folgendes umfasst:

Teilen der selektierten Ziele in Gruppen gemäß Kommunikationszeiten, zu denen eine Kommunikation erwartet wird, wobei jede von den Gruppen einer speziellen Kommunikationszeit zugeordnet ist; und Steuern eines Transfers der falschen Kommunikationsdaten für jede von den Gruppen, wobei für jede von den Gruppen der Transfer der falschen Kommunikationsdaten zu einer Kommunikationszeit ausgeführt wird, der die entsprechende Gruppe zugeordnet ist; und

eine Datenübertragungseinheit (213), die die falschen Kommunikationsdaten zu einem entsprechenden Endgerät abhängig von einem Steuerergebnis transferiert.

6. Basisstation (200) zum Übertragen von falschen Kommunikationsdaten nach Anspruch 5, wobei die Kommunikationssteuereinheit (212) eine Zeit steuert, in der eine Kommunikation durchgeführt wird, für jede von den Gruppen.

7. Basisstation (200) zum Übertragen von falschen Kommunikationsdaten nach Anspruch 6, wobei die Kommunikationssteuereinheit (212) einen Mittelwert einer Normalverteilung mit einer Mitte von jeder Zeit als ein Mittelwert steuert.

8. Basisstation (200) zum Übertragen von falschen Kommunikationsdaten nach Anspruch 5, wobei die Kommunikationssteuereinheit (212) ein Gewicht abhängig von einer Telefonnummer einstellt, mit der eine Kommunikation durchgeführt wird, für jede von den Gruppen zur Steuerung der Kommunikationsmenge.

**Revendications**

1. Procédé de transmission de données de communication factices, comprenant:

la sélection de cibles (S110) vers et depuis lesquelles les données de communication factices doivent être transmises et reçues parmi des terminaux (100) positionnés dans une zone définie par une station de base (200) ; le contrôle d'une quantité de communication (S120) en fonction des cibles sélectionnées, dans lequel le contrôle comprend:

la division des cibles sélectionnées en groupes en fonction des temps de communication, auxquels la communication est attendue, dans lequel chacun des groupes est associé à un temps de communication particulier; et le contrôle d'un transfert des données de communication factices pour chacun des groupes, dans lequel, pour chacun des groupes, le transfert des données de communication factices est exécuté à un moment de communication auquel le groupe correspondant est associé; et

le transfert des données de communication factices (S130) vers un terminal correspondant en fonction d'un résultat de contrôle.

2. Procédé de transmission de données de communication factices selon la revendication 1, dans lequel le contrôle comprend le contrôle d'un temps pendant lequel la communication est effectuée pour chacun des groupes.

3. Procédé de transmission de données de communication factices selon la revendication 2, dans lequel, lors du contrôle de l'heure, une valeur moyenne d'une distribution normale ayant un centre de chaque heure comme valeur moyenne est contrôlée.

4. Procédé de transmission de données de communication factices selon la revendication 1, dans lequel le contrôle comprend le réglage d'un poids en fonction d'un numéro de téléphone avec lequel la communication est effectuée pour chacun des groupes afin de contrôler la quantité de communication.

5. Station de base (200) pour la transmission de données de communication factices, comprenant:

une unité de sélection de cible (211) sélectionnant des cibles (100) vers et depuis lesquelles de données de communication factices doivent être transmises et reçues parmi des terminaux positionnés dans une zone définie;

une unité de contrôle de communication (212) contrôlant une quantité de communication en fonction des cibles sélectionnées, dans laquelle le contrôle comprend:

la division des cibles sélectionnées en groupes en fonction des temps de communication, auxquels la communication est attendue, dans laquelle chacun des groupes est associé à un temps de communication particulier; et

le contrôle d'un transfert des données de communication factices pour chacun des groupes, dans lequel, pour chacun des groupes, le transfert des données de communication factices est exécuté à un moment de communication auquel le groupe correspondant est associé; et

une unité de transmission de données (213) transférant les données de communication factices à un terminal correspondant en fonction d'un résultat de contrôle.

6. Station de base (200) pour la transmission de données de communication factices de la revendication 5, dans laquelle l'unité de contrôle de communication (212) contrôle un temps pendant lequel la communication est effectuée pour chacun des groupes.

7. Station de base (200) pour la transmission de données de communication factices de la revendication 6, dans laquelle l'unité de contrôle de communication (212) contrôle une valeur moyenne d'une distribution normale ayant un centre de chaque temps comme valeur moyenne.

8. Station de base (200) pour la transmission de données de communication factices selon la revendication 5, dans laquelle l'unité de contrôle de communication (212) fixe un poids en fonction d'un numéro de téléphone avec lequel la communication est effectuée pour chacun des groupes afin de contrôler la quantité de communication.

EP 2 950 501 B1

FIG. 1

FIG. 2

221          222          223    220

| RECEIVING UNIT | CONFIRMING UNIT | FILTERING UNIT |

FIG. 3

START

SELECT TARGETS                    S110

CONTROL
COMMUNICATION                      S120
AMOUNT

TRANSFER FAKE
COMMUNICATION DATA                 S130

END

FIG. 4

```
        ┌─────────────┐
        │    START    │
        └──────┬──────┘
               │
               ▼
   ┌───────────────────────┐
   │     RECEIVE FAKE       │ ~S210
   │  COMMUNICATION DATA    │
   └───────────┬───────────┘
               │
               ▼
   ┌───────────────────────┐
   │   CONFIRM WHETHER      │ ~S220
   │ IDENTIFICATION VALUE IS│
   │       PRESENT          │
   └───────────┬───────────┘
               │
               ▼
   ┌───────────────────────┐
   │     FILTER TRAFFIC     │ ~S230
   └───────────┬───────────┘
               │
               ▼
        ┌─────────────┐
        │     END     │
        └─────────────┘
```

FIG. 5

**EP 2 950 501 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020130095571

- EP 2058982 A1